# EUROPEAN PATENT SPECIFICATION

(11) **EP 3 133 283 B1**
(45) Date of publication and mention of the grant of the patent: **15.01.2020**
(21) Application number: 15779629.3
(22) Date of filing: 16.04.2015
(51) Int. Cl.: B64G 1/40, F02K 9/08

(54) **VAPOR JET SYSTEM**
DAMPFSTRAHLSYSTEM
SYSTÈME DE JET DE VAPEUR

(30) Priority: 18.04.2014 JP 2014086718
(43) Date of publication of application: 22.02.2017
(73) Proprietor: Japan Aerospace Exploration Agency, Chofu-shi, Tokyo 182-8522 (JP)
(72) Inventor: KAWAGUCHI, Junichiro, Sagamihara-shi Kanagawa 252-5210 (JP); MORI, Osamu, Sagamihara-shi Kanagawa 252-5210 (JP); YAMAMOTO, Takayuki, Sagamihara-shi Kanagawa 252-5210 (JP); CHUJO, Toshihiro, Sagamihara-shi Kanagawa 252-5210 (JP); MOTOOKA, Norizumi, Sagamihara-shi Kanagawa 252-5210 (JP)
(74) Representative: Robson, Aidan John
(86) International application number: PCT/JP2015/061687
(87) International publication number: WO 2015/159944

(56) References cited:
- JP-A- 2004 197 592
- JP-A- 2009 030 528
- US-A- 3 159 967
- US-A- 3 358 452
- US-A- 3 373 563
- US-A- 3 471 106
- US-A- 3 898 798
- US-A- 5 239 820

## Description

### Technical Field

The present invention relates to a vapor jet system, and in more detail, to a vapor jet system for jetting out vapor generated by sublimation of a sublimable solid.

### Background Art

Typical examples of conventional propulsion systems for spacecrafts such as satellites include a cold gas thruster, a hot gas thruster, and an ion engine.

As a cold gas thruster, there is one described in Tables 17-4 and 17-5 of Non Patent Literature 1, for example. Since this propulsion system uses high-pressure nitrogen gas, the system requires a tank and a pipe having high pressure resistance, a pressure regulator, and the like. Thus, installing such a propulsion system on a spacecraft leads to an increase in the weight of the spacecraft. Further, in this system, as fuel is loaded in a gaseous state, the energy density is low. Thus, when jetting is continued, a pressure drop occurs in the system, so that the thrust available in the propulsion system also decreases gradually.

As a hot gas thruster, there is one described in Non Patent Literature 2, for example. This propulsion system requires a combustor, which leads to complexity in the system configuration, and also an increase in weight. Further, this system mainly uses toxic hydrazine as fuel, which is unsuitable for handleability of a small satellite.

As an ion engine, there is one described in Non Patent Literature 3, for example. In this propulsion system, since it is necessary to ionize a noble gas such as xenon, the amount of power consumption is very large. Further, although specific thrust is high, since it is a system in which considerably lightweight electrically-charged atoms jet out at an ultra-high speed, the available thrust is small. Further, a complicated heavy mechanism is required to configure such a jet system.

Accordingly, in the case of applying such a conventional propulsion system for a spacecraft to attitude control or an orbital maneuver of a small satellite, there are problems on the mounting space, weight, and the complexity of the system.

As compared with a propulsion system involving such problems, a gas-liquid equilibrium thruster is promising as a propulsion system for a small satellite. A gas-liquid equilibrium thruster uses a vapor pressure of a liquid used as fuel, and jets out only vapor to obtain thrust. Thus, it does not require a gas accumulator, a combustor, and the like, which provides an advantage of being able to achieve weight reduction and simplification of the system, for example. As propulsion systems utilizing gas-liquid equilibrium, there are gas-liquid equilibrium thrusters using porous metal, a filter, and a vane, as described in Patent Literatures 1 to 3.

US 3,471,106 discloses a valveless microrocket system. JP 2004197592 discloses a method and a device for generating thrust.

US 5,239,820 discloses a propulsion system which uses a sublimable solid in a vapor jet system in a container. A heater heats at least part of a vapor flow-path and vapor is jetted out of an opening via a vapor discharge port.

US 3,898,798 shows a similar type of system which uses a filter to prevent passage of the sublimable solid whilst allowing vapor to pass through it to the vapor flow-path.

### Citation List

### Patent Literature

Patent Literature 1: Japanese Patent Laid-Open No. 2009-214695
Patent Literature 2: Japanese Patent Laid-Open No. 2011-183841
Patent Literature 3: Japanese Patent Laid-Open No. 2011-183840

### Non Patent Literature

Non Patent Literature 1: Space Mission Analysis and Design, Space Technology Library, 1999, pp.692-693
Non Patent Literature 2: Advanced Space Propulsion Systems, Springer, 2003, Liquid Propulsion Systems, pp.24-26
Non Patent Literature 3: Advanced Space Propulsion Systems, Springer, 2003, Ion Thruster, pp.80-84

### Summary of Invention

### Technical Problem

However, in the propulsion systems described in Patent Literatures 1 to 3, in order to extract only fuel in a gaseous state from a fuel tank in a microgravity state, gas-liquid separation must be performed by devices which store liquid fuel and control gas-liquid interface, such as porous metal, a filter, and a vane. As such, the system becomes complicated and heavy. Further, even with such devices, when the gas is jetting out for a long time beyond the control capability of the devices, there is a problem that liquid fuel, not having been vaporized, jets out, causing lowering of fuel efficiency and unstable satellite attitude.

An object of the present invention is to provide a small and light-weight vapor jet system having a simple structure.

Further, an object of the present invention is to provide a vapor jet system which prevents fuel, not having been vaporized, from jetting out, enables improvements in continuous jetting performance and fuel efficiency, and enables the satellite attitude to be stabilized.

### Solution to Problem

An aspect of the present invention is to provide a vapor jet system, according to the features of claim 1, including a container for storing a sublimable solid, the container having a vapor discharge port for discharging vapor generated by sublimation of the sublimable solid; a member having an opening for jetting out the vapor to the outside of the vapor jet system; a vapor flow path between the vapor discharge port and the opening; and a filter for preventing passage of the sublimable solid and allowing the vapor to pass through, the filter being provided to the vapor flow path.

Here, "preventing passage of the sublimable solid" does not mean "completely preventing passage of the sublimable solid" but means "preventing passage of the sublimable solid at least at a certain level".

At least a part of the vapor flow path may include a first tubular member.

The vapor jet system includes a first heater for heating the inside of the container.

The vapor jet system includes at least one of a pressure sensor for measuring pressure inside the container and a first temperature sensor for measuring temperature inside the container, and the pressure inside the container may be controllable based on data from at least one of the pressure sensor and the first temperature sensor.

The container may include a second tubular member.

The member may be a nozzle.

The member may be the first tubular member.

The container may include a second tubular member, and the first tubular member and the second tubular member may be integrally configured.

The vapor jet system includes a second heater for heating at least a part of the vapor flow path.

The vapor jet system may further include a second temperature sensor for measuring temperature of the vapor flow path, and based on data from at least one of the pressure sensor and the first temperature sensor, and data from the second temperature sensor, the temperature of the vapor flow path may be controllable to be the temperature inside the container or higher by heating the second heater.

The vapor jet system may be configured such that whether or not to allow the vapor to jet out from the opening is substantially controllable by controlling on or off of the first heater.

The vapor jet system may further include a valve provided to the vapor flow path.

### Advantageous Effects of Invention

According to the present invention having the configuration described above, a small and light-weight vapor jet system having a simple structure is provided.

Further, according to the present invention having the configuration described above, a vapor jet system which prevents fuel, not having been vaporized, from jetting out, enables improvements in continuous jetting performance and fuel efficiency, and enables satellite attitude to be stabilized, is provided.

Further, according to the present invention having the configuration described above, as a solid having a higher density than that of a liquid is used as a source of generating vapor, a vapor jet system having a storage container which can be filled at a high density is provided.

### Brief Description of Drawings

[Figure 1] Figure 1 is a sectional schematic diagram of a vapor jet system according to a first embodiment of the present invention.
[Figure 2] Figure 2 is a sectional schematic diagram of a vapor jet system according to a second embodiment of the present invention.
[Figure 3] Figure 3 is a sectional schematic diagram of a vapor jet system according to a third embodiment of the present invention.
[Figure 4] Figure 4 is a sectional schematic diagram of a vapor jet system according to a fourth embodiment of the present invention.

### Description of Embodiments

Embodiments of the present invention will be described below with reference to the drawings.

### (First embodiment)

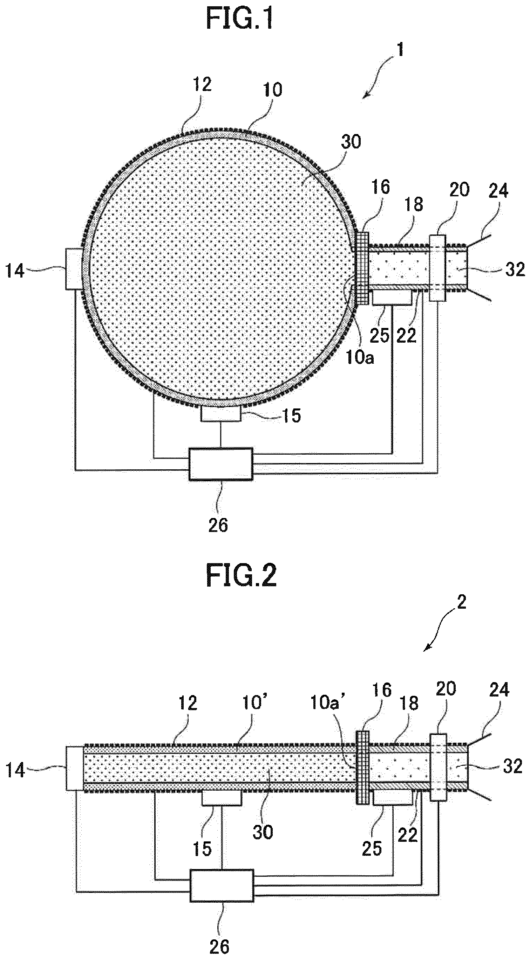

Figure 1 is a sectional schematic diagram of a vapor jet system according to a first embodiment of the present invention. With reference to Figure 1, configuration and operation principle of the first embodiment of the present invention will be described.

As shown in Figure. 1, a vapor jet system 1 of the present embodiment mainly includes a solid storage tank 10, a first heater 12, a pressure sensor 14, a first temperature sensor 15, a filter 16, a pipe 18, an electromagnetic valve 20, a second heater 22, a nozzle 24, a second temperature sensor 25, and a controller 26. The controller 26 is electrically connected with the first heater 12, the pressure sensor 14, the first temperature sensor 15, the electromagnetic valve 20, the second heater 22, and the second temperature sensor 25, and controls operation of the first heater 12, the electromagnetic valve 20, the second heater 22, and the like based on data from the pressure sensor 14, the first temperature sensor 15, the second temperature sensor 25, and the like.

The solid storage tank 10 is a container for storing naphthalene 30 which is a sublimable solid. In the solid storage tank 10, the naphthalene 30 which is a sublimable solid is stored. The sublimable solid is not limited to this. Xenon difluoride may be used, for example, other than naphthalene. The solid storage tank 10 has a vapor discharge port 10a for discharging vapor 32 generated by sublimation of the naphthalene 30.

The vapor discharge port 10a is provided with a filter 16. The filter 16 has a function of preventing passage of the naphthalene 30 in a solid state and allowing the vapor 32 to pass through. Thus, by providing the filter 16 to the vapor discharge port 10a, it is possible to prevent the naphthalene 30 in a solid state from leaking to the outside of the solid storage tank 10. This means that by the filter 16, it is possible to prevent the naphthalene 30, which is a sublimable solid not having been generated as the vapor 32, from jetting out, and to separate the naphthalene 30 which is a sublimable solid from the vapor 32. The filter 16 does not necessarily prevent passage of the naphthalene 30 in a solid state completely. There is no problem even if a small amount of naphthalene 30 in a solid state passes through. While the filter 16 is provided to the vapor discharge port 10a in the present embodiment, it can be arranged at any position in the vapor flow path between the vapor discharge port 10a and the electromagnetic valve 20.

The filter 16 is connected with the nozzle 24 via the pipe 18 which is a first tubular member. Thus, in the present embodiment, the vapor flow path between the vapor discharge port 10a and the opening, of the nozzle 24, for jetting out the vapor 32 to the outside of the vapor jet system 1 is configured of the pipe 18 which is the first tubular member. As the first tubular member, another tubular member such as a hose may be used instead of the pipe 18.

The pipe 18 is provided with the electromagnetic valve 20. By opening and closing the electromagnetic valve 20, it is possible to control whether or not to allow the vapor 32 to jet out from the nozzle 24, and further, the jet amount of the vapor 32 from the nozzle 24. When the electromagnetic valve 20 is released, the vapor 32 jets out from the nozzle 24, whereby thrust is available. Regarding the available thrust, an estimate can be calculated from the measured data of the pressure inside the solid storage tank 10 by the pressure sensor 14. It should be noted that in order to prevent leakage to the outside more reliably in the case where a sublimable solid has toxicity, for example, the electromagnetic valve may be configured as a double valve. Further, a plurality of nozzles for jetting out the vapor may be provided. In that case, while the vapor discharge port 10a is connected with a main pipe line and the nozzles are connected with the downstream ends of the branch pipe lines connected with the main pipe line, respectively, a valve for cutting off the entire vapor flow paths may be provided to the main pipe line, in addition to the valves corresponding to the respective nozzles or as single valve.

The outer surface of the solid storage tank 10 is provided with the first heater 12, whereby the inside of the solid storage tank 10 can be heated. The first heater 12 may be provided to the inner surface of the solid storage tank 10. When the first heater 12 is provided to the inner surface of the solid storage tank 10, the inside of the solid storage tank 10 can be heated more efficiently compared with the case where the heater is provided to the outer surface thereof.

The solid storage tank 10 is also provided with the pressure sensor 14 for measuring the pressure inside the solid storage tank 10, and the first temperature sensor 15 for measuring the temperature inside the solid storage tank 10. As such, by the first heater 12 and the pressure sensor 14, the sublimation pressure of the naphthalene 30 in the solid storage tank 10 is controllable. This means that when the first heater 12 is turned on, the naphthalene 30 is heated so that the sublimation pressure of the naphthalene 30 increases, while when the first heater 12 is turned off, the temperature of the naphthalene 30 drops so that the sublimation pressure of the naphthalene 30 decreases. As such, by monitoring the data from the pressure sensor 14, the sublimation pressure of the naphthalene 30 can be controlled. By keeping the sublimation pressure of the naphthalene 30 constant by controlling on and off of the first heater 12 by the controller 26 based on the data obtained from the pressure sensor 14, the thrust level available by the vapor jet can be stabilized. Further, by increasing or decreasing the sublimation pressure of the naphthalene 30 by controlling on or off of the first heater 12 by the controller 26 based on the data obtained from the pressure sensor 14, the thrust level available by the vapor jet can be increased or decreased. As described above, regarding the available thrust, as an estimate can be obtained based on the data obtained from the pressure sensor 14, the thrust is controllable by the controller 26. It should be noted that the first heater 12 may be provided all over the outer surface of the solid storage tank 10 or on a portion of the outer surface. Further, the first heater 12 may be configured of single heater or a plurality of heaters.

The pipe 18 is provided with the second heater 22 on the outer surface thereof, by which the inside of the pipe 18, which is a flow path of the vapor 32, can be heated. The pipe 18 is provided with the second temperature sensor 25 electrically connected with the controller 26, and the temperature inside the pipe 18 is measured. By allowing the second heater 22 to perform heating by the controller 26 based on the data obtained from the first temperature sensor 15 and the second temperature sensor 25, it is possible to prevent the vapor 32 from being solidified in the pipe 18 by causing the temperature inside the pipe 18 to be the temperature inside the solid storage tank 10 or higher.

The second heater 22 may also be provided to the outer surface of the nozzle 24, in addition to the pipe 18. Further, the second heater 22 may be provided all over the outer surface of the pipe 18 or on a portion of the outer surface. Further, the second heater 22 may be configured of single heater or a plurality of heaters.

The temperature inside the solid storage tank 10, when the pressure inside the solid storage tank 10 reaches the saturated sublimation pressure of the sublimable solid, can be calculated from the pressure inside the solid storage tank 10 obtained from the pressure sensor 14 based on a sublimation pressure curve of naphthalene. Further, the pressure inside the solid storage tank 10, when the pressure inside the solid storage tank 10 reaches the saturated sublimation pressure of the sublimable solid, can be calculated from the temperature inside the solid storage tank 10 obtained from the first temperature sensor 15 based on a sublimation pressure curve of naphthalene. Thus, either the pressure sensor 14 or the first temperature sensor 15 may be omitted. In the case where jetting is performed in a state where the pressure inside the solid storage tank 10 does not reach the saturated sublimation pressure of the sublimable solid such as the case of performing jetting for a long time or performing jetting frequently, since a gap is caused between an equivalent value, between pressure and temperature based on a sublimation pressure curve, and the actual value, it is preferable to provide both the pressure sensor 14 and the first temperature sensor 15.

### (Second embodiment)

Figure 2 is a sectional schematic diagram of a vapor jet system according to a second embodiment of the present invention. In the present embodiment, the configuration of a vapor jet system 2 is similar to that in Figure 1, except for a pipe 10' which is a second tubular member and an opening. Parts in Figure 2 corresponding to those in Figure 1 are denoted by the same reference numerals, and the description of the parts which are the same as those of the first embodiment is omitted.

As shown in Figure 2, in the vapor jet system 2 according to the second embodiment of the present invention, a container for storing a sublimable solid is the pipe 10' which is a second tubular member, instead of the solid storage tank 10 of the first embodiment. One end of the pipe 10' is closed, and the vapor 32 generated by sublimation of the naphthalene 30 is discharged from the opening at the other end of the pipe 10'. As such, the opening 10a' serves as a vapor discharge port (10a).

The opening of the pipe 10' is provided with the filter 16 whereby it is possible to prevent leakage of the naphthalene 30 in a solid state to the outside of the pipe 10'.

When the filter 16 is accommodated in the pipe and the pipe 10' and the pipe 18 are integrally configured, the size and weight of the vapor jet system can be further reduced and the structure thereof becomes simpler.

As described above, according to the present embodiment, by using a pipe which is a tubular member as a container for storing a sublimable solid, it is possible to achieve size reduction, simplification of the structure, and weight reduction of the vapor jet system.

### (Third embodiment)

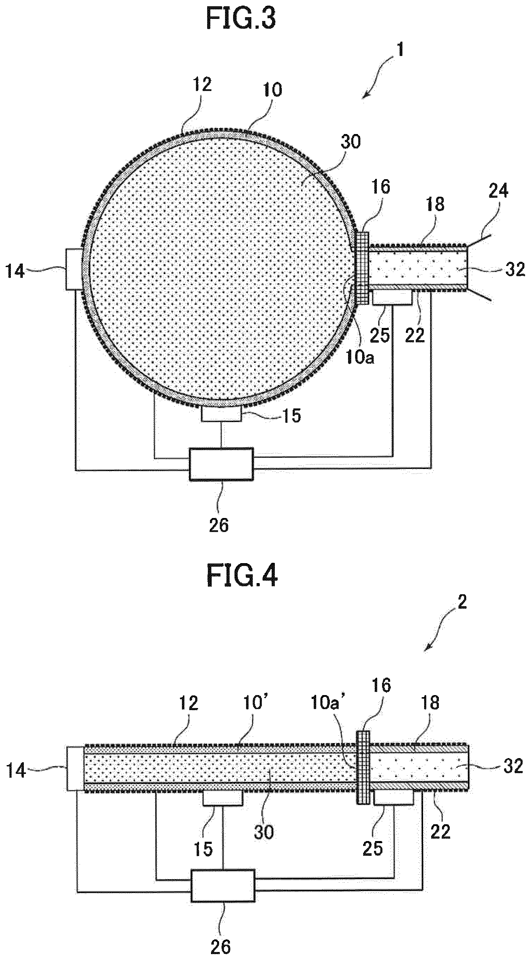

Figure 3 is a sectional schematic diagram of a vapor jet system according to a third embodiment of the present invention. In the present embodiment, the configuration of a vapor jet system 3 is the same as that of Figure 1. Parts in Figure 3 corresponding to those in Figure 1 are denoted by the same reference numerals, and the description of the parts which are the same as those of the first embodiment is omitted.

As shown in Figure. 3, the vapor jet system 3 according to the third embodiment of the present invention does not use the electromagnetic valve 20 of the first embodiment.

Since the sublimation pressure of naphthalene is very small, even if the solid storage tank 10 communicates with the outside of the vapor jet system 3 without using the electromagnetic valve 20, the vapor 32 to be discharged from the nozzle 24 is in only a small amount when the naphthalene 30 stored in the solid storage tank 10 is not heated (for example, regarding the sublimation pressure of naphthalene, an estimated sublimation pressure in the outer space of -30°C is less than 0.1 Pa). Meanwhile, when the naphthalene 30 stored in the solid storage tank 10 is heated, the sublimation pressure of the naphthalene 30 increases (for example, the sublimation pressure of naphthalene is 44.5 Pa at 40°C), and the vapor 32 jets out from the nozzle 24. Thus, in the present embodiment, whether or not to allow the vapor 32 to jet out from the nozzle 24 is substantially controlled by controlling on or off of the first heater 12 by the controller 26.

As described above, according to the present embodiment, as a valve is not used, it is possible to achieve further size reduction, simplification of the structure, and weight reduction of the vapor jet system.

It should be noted that while the filter 16 is provided to the vapor discharge port 10a in the present embodiment, it can be arranged at any position in the vapor flow path between the vapor discharge port 10a and the opening, of the nozzle 24, for jetting out the vapor 32 to the outside of the vapor jet system 3.

### (Fourth embodiment)

Figure 4 is a sectional schematic diagram of a vapor jet system according to a fourth embodiment of the present invention. In the present embodiment, the configuration of a vapor jet system 4 is the same as that of Figure 2. Parts in Figure 4 corresponding to those in Figure 2 are denoted by the same reference numerals, and the description of the parts which are the same as those of the second embodiment is omitted.

As shown in Figure. 4, the vapor jet system 4 according to the fourth embodiment of the present invention does not use the electromagnetic valve 20 of the second embodiment, like the third embodiment, and the nozzle 24 is also omitted.

In the present embodiment, the nozzle 24 is omitted for achieving size reduction, simplification of the structure, and weight reduction, and the pipe 18, which is the first tubular member, also serves as a member having an opening for jetting out the vapor 32 to the outside of the vapor jet system 4.

Similar to the third embodiment, in the present embodiment, whether or not to allow the vapor 32 to jet out from the pipe 18 is substantially controlled by controlling on or off of the first heater 12 by the controller.

As described above, according to the present embodiment, since a pipe which is a tubular member is used as a container for storing a sublimable solid and no valve or nozzle is used, it is possible to achieve further size reduction, simplification of the structure, and weight reduction of the vapor jet system.

While a propulsion system is exemplary described as a vapor jet system in the above embodiments, the present invention is also applicable to a vapor jet system other than a propulsion system. A small and light-weight vapor jet system having a simple structure and high continuous jetting performance can be realized.

### Reference Signs List

- 1: vapor jet system according to first embodiment
- 2: vapor jet system according to second embodiment
- 3: vapor jet system according to third embodiment
- 4: vapor jet system according to fourth embodiment
- 10: solid storage tank
- 10': pipe
- 10a: vapor discharge port
- 10a': vapor discharge port
- 12: first heater
- 14: pressure sensor
- 15: first temperature sensor
- 16: filter
- 18: pipe
- 20: electromagnetic valve
- 22: second heater
- 24: nozzle
- 25: second temperature sensor
- 26: controller
- 30: sublimable solid (naphthalene)
- 32: vapor

## Claims

1. A vapor jet system comprising:
a container (10) for storing a sublimable solid, the container comprising a vapor discharge port (10a) for discharging vapor generated by sublimation of the sublimable solid;
a first heater (12) for heating an inside of the container;
a member comprising an opening for jetting out the vapor to an outside of the vapor jet system;
a vapor flow path between the vapor discharge port and the opening;
a filter (16) for preventing passage of the sublimable solid and allowing the vapor to pass through, the filter being provided to the vapor flow path;
at least one of a pressure sensor (14) for measuring pressure inside the container and a first temperature sensor (15) for measuring temperature inside the container;
and a second temperature sensor (25) for measuring temperature of the vapor flow path; **characterised by**:
a second heater (22) for heating at least a part of the vapor flow path; and
a controller configured to:
control, based on data from at least one of the pressure sensor (14) and the first temperature sensor (15), and data from the second temperature sensor (25), the temperature of the vapor flow path to be the temperature inside the container or higher by causing heating of the second heater.

2. The vapor jet system according to claim 1, wherein
at least a part of the vapor flow path comprises a first tubular member.

3. The vapor jet system according to any one of claims 1 or 2, wherein
the pressure inside the container is controllable based on data from at least one of the pressure sensor and the first temperature sensor.

4. The vapor jet system according to any one of claims 1 to 3, wherein
the container (10) comprises a second tubular member.

5. The vapor jet system according to any one of claims 1 to 4, wherein
the member is a nozzle (24).

6. The vapor jet system according to any one of claims 2 to 4, wherein the member is the first tubular member.

7. The vapor jet system according to claim 6, wherein
the container comprises a second tubular member, and
the first tubular member and the second tubular member are integrally configured.

8. The vapor jet system according to any one of claims 2 to 7, wherein
whether or not to allow the vapor to jet out from the opening is substantially controllable by controlling on or off of the first heater.

9. The vapor jet system according to any one of claims 1 to 7, further comprising
a valve provided to the vapor flow path.

## Patentansprüche

1. Dampfstrahlsystem mit:
Einem Behälter (10) zur Lagerung eines sublimierbaren Feststoffs, wobei der Behälter eine Dampfauslassöffnung (10a) zur Abgabe von Dampf aufweist, der durch Sublimierung des sublimierbaren Feststoffs erzeugt wurde;
einer ersten Heizeinrichtung (12) um ein Inneres des Behälters zu erwärmen;
einem Element mit einer Öffnung, um den Dampf zu einer Außenseite des Dampfstrahlsystems auszustoßen;
einem Dampffließweg zwischen der Dampfauslassöffnung und der Öffnung;
einem Filter (16) zur Verhinderung des Durchgangs des sublimierbaren Feststoffs und dem Ermöglichen des Dampfdurchlasses, wobei der Filter an dem Dampffließweg vorgesehen ist;
mindestens einem von einem Drucksensor (14) zur Bestimmung des Drucks innerhalb des Behälters und einem ersten Temperatursensor (15) zur Bestimmung der Temperatur innerhalb des Behälters;
und
einem zweiten Temperatursensor (25) zur Bestimmung der Temperatur des Dampffließwegs; **gekennzeichnet durch**:
eine zweite Heizeinrichtung (22) zum Erwärmen mindestens eines Teils des Dampffließwegs; und
einem Steuergerät, konfiguriert um:
zu steuern, basierend auf Daten von zumindest einem des Drucksensors (14) und des ersten Temperatursensors (15), und Daten von dem zweiten Temperatursensor (25), wobei die Temperatur des Dampffließwegs die Temperatur innerhalb des Behälters oder höher ist, indem Erwärmen der zweiten Heizeinrichtung bewirkt wird.

2. Dampfstrahlsystem nach Anspruch 1, wobei
mindestens ein Teil des Dampffließwegs ein erstes röhrenförmiges Element enthält.

3. Dampfstrahlsystem nach einem der Ansprüche 1 oder 2, wobei der Druck innerhalb des Behälters basierend auf Daten von zumindest einem des Drucksensors oder des ersten Temperatursensors steuerbar ist.

4. Dampfstrahlsystem nach einem der Ansprüche 1 bis 3, wobei
der Behälter (10) ein zweites röhrenförmiges Element aufweist.

5. Dampfstrahlsystem nach einem der Ansprüche 1 bis 4, wobei das Element eine Düse (24) ist.

6. Dampfstrahlsystem nach einem der Ansprüche 2 bis 4, wobei
das Element das erste röhrenförmige Element ist.

7. Dampfstrahlsystem nach Anspruch 6, wobei
der Behälter ein zweites röhrenförmiges Element enthält, und
das erste röhrenförmige Element und das zweite röhrenförmige Element einstückig ausgebildet sind.

8. Dampfstrahlsystem nach einem der Ansprüche 2 bis 7, wobei das Ermöglichen oder Nichtermöglichen, dass Dampf aus der Öffnung ausgestoßen wird, im Wesentlichen durch Steuern des Einschaltens oder Ausschaltens der ersten Heizeinrichtung steuerbar ist.

9. Dampfstrahlsystem nach einem der Ansprüche 1 bis 7, welches des Weiteren
ein an dem Dampffließweg vorgesehenes Ventil aufweist.

## Revendications

1. Système de jet de vapeur comprenant :
un récipient (10) pour stocker un solide sublimable, le récipient comprenant un orifice de décharge de vapeur (10a) pour décharger la vapeur générée par la sublimation du solide sublimable ;
un premier dispositif de chauffage (12) pour chauffer un intérieur du récipient ;
un élément comprenant une ouverture pour expulser la vapeur vers un extérieur du système de jet de vapeur ;
une trajectoire d'écoulement de vapeur entre l'orifice de décharge de vapeur et l'ouverture ;
un filtre (16) pour empêcher le passage du solide sublimable et permettre le passage de la vapeur, le filtre étant prévu sur la trajectoire d'écoulement de vapeur ;
au moins l'un d'un capteur de pression (14) pour mesurer la pression à l'intérieur du récipient et d'un premier capteur de température (15) pour mesurer la température à l'intérieur du récipient ; et
un second capteur de température (25) pour mesurer la température de la trajectoire d'écoulement de vapeur ; **caractérisé par** :
un second dispositif de chauffage (22) pour chauffer au moins une partie de la trajectoire d'écoulement de vapeur ; et
un organe de commande configuré pour :
commander, sur la base des données provenant d'au moins l'un du capteur de pression (14) et du premier capteur de température (15), et des données provenant du second capteur de température (25), la température de la trajectoire d'écoulement de vapeur pour qu'elle soit supérieure ou égale à la température à l'intérieur du récipient en provoquant le chauffage du second dispositif de chauffage.

2. Système de jet de vapeur selon la revendication 1, dans lequel :
au moins une partie de la trajectoire d'écoulement de vapeur comprend un premier élément tubulaire.

3. Système de jet de vapeur selon l'une quelconque des revendications 1 ou 2, dans lequel :
la pression à l'intérieur du récipient peut être commandée sur la base des données provenant d'au moins l'un du capteur de pression et du premier capteur de température.

4. Système de jet de vapeur selon l'une quelconque des revendications 1 à 3, dans lequel :
le récipient (10) comprend un second élément tubulaire.

5. Système de jet de vapeur selon l'une quelconque des revendications 1 à 4, dans lequel :
l'élément est une buse (24).

6. Système de jet de vapeur selon l'une quelconque des revendications 2 à 4, dans lequel :
l'élément est le premier élément tubulaire.

7. Système de jet de vapeur selon la revendication 6, dans lequel :
le récipient comprend un second élément tubulaire, et
le premier élément tubulaire et le second élément tubulaire sont configurés de manière solidaire.

8. Système de jet de vapeur selon l'une quelconque des revendications 2 à 7, dans lequel :
le fait d'autoriser ou pas la vapeur à être expulsée par l'ouverture peut être sensiblement commandé en commandant la marche ou l'arrêt du premier dispositif de chauffage.

9. Système de jet de vapeur selon l'une quelconque des revendications 1 à 7, comprenant en outre :
une valve prévue sur la trajectoire d'écoulement de vapeur.
